# EUROPÄISCHE PATENTSCHRIFT

(11) **EP 0 673 092 B1**
(45) Veröffentlichungstag und Bekanntmachung des Hinweises auf die Patenterteilung: **26.04.2000**
(21) Anmeldenummer: 95103621.9
(22) Anmeldetag: 14.03.1995
(51) Int. Cl.: H01S 3/06, H01S 3/094, G02F 3/02

(54) **Optisch gepumpter bistabiler Laser**
Optically pumped bistable laser
Laser bistable à pompage optique

(30) Priorität: 19.03.1994 DE 4409444
(43) Veröffentlichungstag der Anmeldung: 20.09.1995
(73) Patentinhaber: ALCATEL, 75008 Paris (FR)
(72) Erfinder: Pfeiffer, Thomas, Dr., D-70569 Stuttgart (DE)
(74) Vertreter: Schätzle, Albin, Dipl.-Phys.

(56) Entgegenhaltungen:
- WO-A-92/04750
- US-A- 3 440 562
- US-A- 5 128 800
- ELECTRONICS LETTERS, Bd. 28, Nr. 18, 27.August 1992, Seiten 1741-1743, XP000309486 GREER E J ET AL: "ALL-OPTICAL FM MODE-LOCKING OF FIBRE LASER"

## Beschreibung

Die Erfindung betrifft einen optisch gepumpten und durch optische Pulse gesteuerten Laser.

In dem Artikel "All-optical FM mode-locking of fibre laser" aus Electronic Letters August 1992, Seiten 1741 - 1743, von E.J. Greer und K. Smith, ist ein Faserlaser zur Erzeugung optischer Pulse beschrieben. Der Faserlaser ist als Ringlaser mit einer Erbium dotierten Faser, einem optischen Filter, einem Fasermodulator und mehreren Kopplern ausgeführt. Der Fasermodulator wird durch optische Pulse angesteuert. Die optischen Pulse verändern kurzzeitig den Brechungsindex des Fasermodulators, woraufhin sich die Phase der in der Erbium dotierten Faser erzeugten kontinuierliche Strahlung (CW-Betrieb) ändert. Dies führt zu Interferenzerscheinungen und somit zur Ausbildung von optischen Pulsen am Laserausgang. Um einen ausreichenden Modulationseffekt, d.h. eine genügend große Phasenverschiebung zu erhalten, ist es erforderlich den Fasermodulator aus einer 8,8 km langen Faser aufzubauen, die z.B., bedingt durch fertigungstechnische Toleranzen, die Funktionsweise des Faserlasers negativ beeinflussen kann. Dieser Faserlaser ist aufgrund der 8,8 km langen Faser besonders temperaturempfindlich.

Aus US 3,440,562 und US 5,128,800 ist jeweils ein bistabiler Laser bekannt, bei dem ein säffigbarer Absorber im Resonator eingebracht ist. Der Absorber hat einen Signaleingang durch den ein Steuersignal zugeführt werden kann. Durch das Steuersignal kann der Absorptionskoeffizient des Absorbers verändert werden. Der Laser wird in einem ersten inaktiven Zustand gehalten, indem die durch Pumplicht im laseraktiven Medium erzeugten Lichtemissionen im Absorber aufgrund eines entsprechenden Absorptionskoeffizienten vollständig absorbiert werden, so daß stimulierte Emissionen im laseraktiven Medium unterdrückt werden. Durch Anlegen eines entsprechenden Steuersignals wird der Absorptionskoeffizient derart verändert, daß die im laseraktiven Medium erzeugten Lichtemissionen nicht mehr absorbiert werden, folglich den Resonator durchlaufen und zu stimulierten Emissionen beitragen, wodurch der Laser in den aktiven Zustand gebracht wird. Der Laser bleibt im laseraktiven Zustand, solange das den Absorptionskoeffizient verändernde Steuersignal am Absorber anliegt.

Es ist deshalb Aufgabe der Erfindung, einen technisch einfacheren optisch gepumpten und durch optischer Pulse gesteuerten Laser zur Verfügung zu stellen.

Diese Aufgabe wird durch die Lehre des Patentanspruchs 1 gelöst. Vorteilhafte Ausgestaltungen sind den Unteransprüchen zu entnehmen.

Ein besonderer Vorteil der Erfindung liegt in der Möglichkeit den bistabilen Laser außer zur Erzeugung optischer Pulse auch als Kippstufe verwenden zu können.

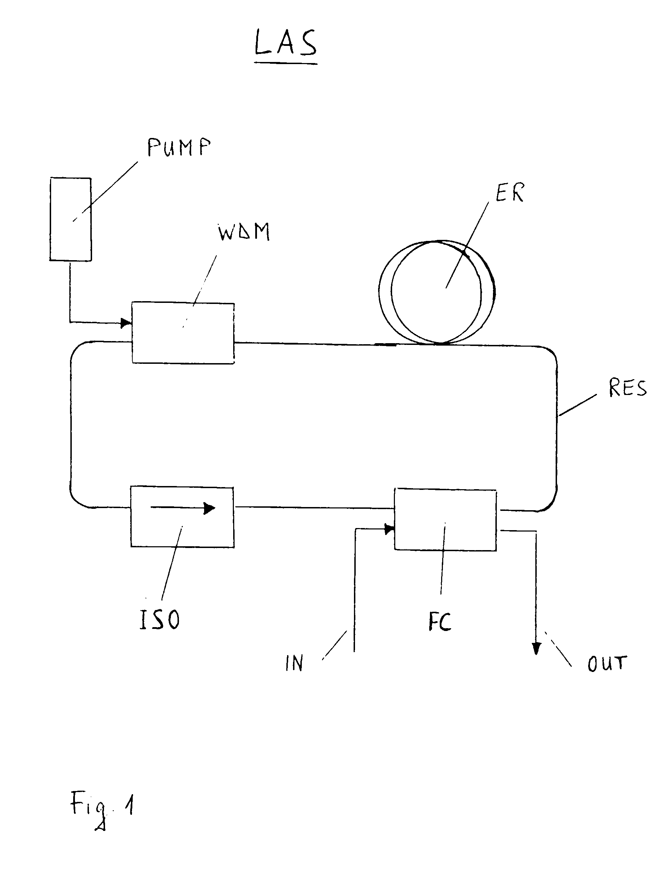

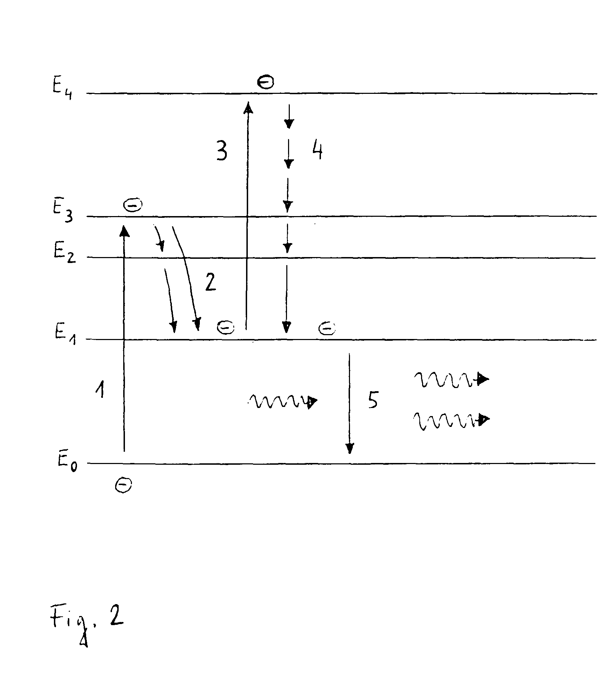

Im folgenden wird die Erfindung anhand eines Ausführungsbeispiels unter Zuhilfenahme der Figuren 1 und 2 erläutert. Es zeigen:
- Fig. 1: eine schematische Darstellung eines Ausführungsbeispiels des erfindungsgemäßen bistabilen Lasers, und
- Fig. 2: ein Niveausystem einer Erbium dotierten Faser eines erfingungsgemäßen bistabilen Lasers.

Ein Ausführungsbeispiel der Erfindung wird nun anhand der Figuren 1 und 2 beschrieben. Fig. 1 zeigt den schematisch dargestellten Aufbau eines Ausführungsbeispiels des erfindungsgemäßen bistabilen Lasers. Der bistabile Laser LAS beinhaltet eine Erbium dotierte Faser ER als laseraktives Medium, einen Faserresonator als Resonator und eine Pumplichtquelle PUMP als Energiequelle. Ferner beinhaltet der bistabile Laser LAS einen optischen Isolator ISO, einen wellenlängenabhängigen Koppler WDM und einen asymmetrischen Faserkoppler FC.

Der Faserresonator ist als Ringresonator RES ausgeführt. In den Ringresonator RES sind seriell die Erbium dotierte Faser ER, der asymmetrische Faserkoppler FC, der optische Isolator ISO und der wellenlängenabhängige Koppler WDM eingefügt.

Der wellenlängenabhängige Koppler WDM hat drei Anschlüsse. Zwei Anschlüsse dienen dem Einfügen in den Ringresonator RES. Der dritte Anschluß ist mit der Pumplichtquelle PUMP verbunden. Die Pumplichtquelle PUMP erzeugt Pumplicht, das über den wellenlängenabhängigen Koppler WDM in den Ringresonator eingekoppelt wird. Das Pumplicht hat eine kürzere Wellenlänge als das Signallicht. Der wellenlängenabhängige Koppler WDM koppelt somit Licht aus zwei Fasern und mit unterschiedlicher Wellenlänge in eine Faser.

Der optische Isolator ISO läßt Licht nur in eine Richtung fast verlustfrei passieren, in der anderen Richtung beträgt die Dämpfung des Lichts mehr als 30 dB. Der optische Isolator ISO dient u.a. dazu, eine Umlaufrichtung für das Signallicht festzulegen. Er hat zwei Anschlüsse und wird so in den Ringresonator RES eingefügt, daß seine Durchlaßrichtung gleich der gewünschten Laufrichtung des Signallichts ist.

Der asymmetrische Faserkoppler FC hat vier Anschlüsse. Zwei Anschlüsse dienen dem Einfügen in den Ringresonator RES. Der dritte Anschluß bildet den Eingang IN des bistabilen Lasers LAS, der vierte Anschluß den Ausgang OUT des bistabilen Lasers LAS. Über den Eingang IN (Ausgang OUT) wird asymmetrisch Signallicht in (aus) den Ringresonator RES eingekoppelt (ausgekoppelt). So wird z.B. 20 % des Signallichts aus dem Ringresonator RES ausgekoppelt und steht am Ausgang OUT des bistabilen Lasers LAS zur Verfügung, während die restlichen 80 % des Signallichts im Ringresonator RES verbleiben und den Betrieb des bistabilen Lasers LAS aufrechterhalten.

Die Pumplichtquelle PUMP erzeugt Pumplicht der Wellenlänge 800 nm. Dieses Pumplicht führt in der Erbium dotierten Faser ER zu einer Anregung eines angeregten inaktiven Zustandes, worauf anhand der Fig. 2 näher eingegangen wird. Der bistabile Laser LAS befindet sich im gepumpten Zustand und ohne Anliegen von optischen Signalen am Eingang IN in einem angeregten inaktiven Zustand, d.h. er sendet kein Licht aus. Durch Anlegen von Signallicht am Eingang IN geht der bistabile Laser LAS vom angeregten inaktiven Zustand in den laseraktiven Zustand über. Das Signallicht kann z.B. aus optischen Pulsen bestehen. Bei pulsförmigem Signallicht kann durch die Wahl der Pulsdauer und der Pulsfolgefrequenz der optischen Pulse der bistabile Laser LAS in mehreren unterschiedlichen Zuständen betrieben werden. Im folgenden werden nun zwei Betriebsweisen und drei Verwendungsmöglichkeiten für die optische Nachrichtenübertragung für den bistabilen Laser LAS beschrieben.

Bei der ersten Betriebsweise wird der bistabile Laser LAS über den Eingang IN so angesteuert, daß er im Pulsbetrieb arbeitet. Dazu werden über den Eingang IN periodisch optische Pulse in den Ringresonator RES eingekoppelt. Die Pulsfolgefrequenz der optischen Pulse entspricht einem ganzzahligen Vielfachen der Umlauffrequenz f des Lichts im Ringresonator RES. Die Umlauffrequenz f bestimmt sich aus f = c/(L·n) , mit c = Lichtgeschwindigkeit im Vakuum, L = Resonatorlänge und n = Brechungsindex. Mit z.B. L = 30 m und n = 1,5 ergibt sich eine Umlauffrequenz von f = 6,67 MHz. Die eingekoppelten optischen Pulse induzieren in der sich im angeregten inaktiven Zustand befindlichen Erbium dotierten Faser ER stimulierte Emissionen, so daß eine Verstärkung der optischen Pulse auftritt. Am Ausgang OUT des bistabilen Lasers LAS stehen somit gegenüber den Eingangspulsen verstärkte optische Pulse zur Verfügung. Die Pulsfolgefrequenz der Ausgangspulse ist gleich der Pulsfolgefrequenz der Eingangspulse. Bei dieser Betriebsweise kann der bistabile Laser LAS z.B. als Pulsgenerator verwendet werden. Optische Pulse, die z.B. über ein Telekommunikationsnetz übertragen wurden, können im bistabilen Laser LAS aufbereitet und verstärkt werden und stehen am Ausgang des bistabilen Lasers LAS als Taktsignale z.B. für eine Taktrückgewinnung in der optischen Signalverarbeitung zur Verfügung. Die optischen Pulse sind z.B. eine auf einen Grundtakt modulierte Folge von Bitsignalen (0 oder 1), die nachrichtentechnische Informationen enthält. Die Frequenz des Grundtakts entspricht einem ganzzahligen Vielfachen der Umlauffrequenz f des Lichts im Ringresonator RES. Die Folge von Bitsignalen durchläuft den Ringresonator RES. Jede 1 erzeugt eine stimulierte Emission in der Eribum dotierten Faser ER. Aufgrund der nahezu statistischen Verteilung der logischen Zustände 1 und 0 kann somit nach einer gewissen Zeitspanne der Grundtakt aus der Folge von Bitsignalen herausgefiltert werden und steht am Ausgang als Taktsignal für eine optische Signalverarbeitung zur Verfügung.

Bei der zweiten Betriebsweise wird der bistabile Laser LAS über den Eingang IN so angesteuert, daß er im CW-Betrieb (Aussenden kontinuierlicher Strahlung) arbeitet. Dazu wird über den Eingang IN ein optischer Puls in den Ringresonator RES eingekoppelt. Die Pulsdauer des optischen Pulses muß mindestens der Umlaufzeit (1/f) des Lichts im Ringresonator RES entsprechen. Es muß gewährleistet sein, daß der optische Puls so viele stimulierte Emissionen in der Erbium dotierten Faser ER induziert, daß der CW-Betrieb durch die stimulierten Emissionen aufrechterhalten werden kann. Bei dieser Betriebsweise kann der bistabile Laser LAS somit z.B. als Kippstufe verwendet werden. Der bistabile Laser LAS kippt durch einmaliges Einkoppeln eines optischen Pulses vom angeregten inaktiven Zustand in den laseraktiven Zustand des CW-Betriebs. Das Rücksetzen des bistabilen Lasers LAS in den angeregten inaktiven Zustand kann z.B. durch kurzzeitiges Abschalten des Pumplichts erfolgen.

Beim Ausführungsbeispiel ist der Faserresonator RES als Ringresonator RES ausgeführt. Die Erfindung kann auch bei einem anderen Resonator als dem Ringresonator RES, z.B. bei einem Fabry-Perot-Resonator angewendet werden. Des weiteren kann der Faserresonator RES und auch der gesamte bistabile Laser LAS als monolithisch integrierte Schaltung ausgeführt sein. Als laseraktives Medium dient dann z.B. Quarzglas SiO₂ oder Lithiumniobath LiNbO₃.

Ferner sind beim Ausführungsbeispiel die verwendeten Fasern aus Stabilitätsgründen vorteilhafterweise polarisationserhaltende Einmodenfasern.

Beim Ausführungsbeispiel wird ein asymmetrischer Faserkoppler FC sowohl zum Einkoppeln, als auch zum Auskoppeln von Licht verwendet. Anstelle eines asymmetischen Faserkopplers FC können auch zwei separate asymmetrische Faserkoppler, der eine zum Einkoppeln und der andere zum Auskoppeln von Licht, verwendet werden. Die beiden separaten asymmetrischen Faserkoppler werden dann so in den Ringresonator RES eingefügt, daß in Laufrichtung des Signallichts zuerst der asymmetrische Faserkoppler zum Auskoppeln und dann der asymmetrische Faserkoppler zum Einkoppeln von Licht eingefügt wird. Dies hat den Vorteil, daß ein Übersprechen von Eingangssignalen auf die Ausgangssignale weitesgehend unterdrückt wird.

Fig. 2 zeigt nun die fünf für das Verständnis der Erfindung wesentlichen Energieniveaus E₀, E₁, E₂, E₃, E₄, sowie fünf Übergänge 1, 2, 3, 4, 5 zwischen den Energieniveaus E₀, E₁, E₂, E₃, E₄ der Erbium dotierten Faser des erfindungsgemäßen bistabilen Lasers.

Vom Grundzustand, d.h. vom Energieniveau E₀ können Elektronen in die Energieniveaus E₂ und E₃ durch Pumplicht folgender Wellenlängen angeregt werden: ins Energieniveau E₂ durch 980 nm-Pumplicht, ins Energieniveau E₃ durch 800 nm-Pumplicht. Das Energieniveau E₁ liegt energetisch zwischen den Energieniveaus E₀ und E₂. Elektronen im Energieniveau E₁ können einerseits durch Licht der Wellenlängen 1530 nm bis 1570 nm zu stimulierten Emissionen angeregt werden und andererseits durch Pumplicht der Wellenlänge 800 nm vom Energieniveau E₁ in das Energieniveau E₄ angeregt werden (Anregung aus angeregtem Zustand).

Beim Ausführungsbeispiel wird die Erbium dotierte Faser mit Pumplicht der Wellenlänge 800 nm gepumpt. Dies hat zur Folge, daß Elektronen vom Grundzustand, d.h. vom Energieniveau E₀ in das Energieniveau E₃ angeregt werden (Übergang 1). Die Lebensdauer der Elektronen in den Energieniveaus E₃ und E₂ ist kurz im Vergleich zur Lebensdauer der Elektronen im Energieniveau E₁. Die in das Energieniveau E₃ angeregten Elektronen gehen, gegebenenfalls über das Energieniveau E₂, durch nichtstrahlende Übergänge in das Energieniveau E₁ über (Übergang 2). Das Pumplicht der Wellenlänge 800 nm hat weiterhin zur Folge, daß die ins Energieniveau E₁ angeregten Elektronen ins Energieniveau E₄ angeregt werden (Übergang 3) (Anregung aus angeregtem Zustand). Die in das Energieniveau E₄ angeregten Elektronen gehen, gegebenenfalls über mehrere Energieniveaus, durch nichtstrahlende Übergänge in das Energieniveau E₁ über (Übergang 4). Die Prozesse der Anregung von Elektronen vom Energieniveau E₁ ins Energieniveau E₄ (Übergang 3) und die nichtstrahlenden Übergänge von Elektronen vom Energieniveau E₄ ins Energieniveau E₁ (Übergang 4) wiederholen sich nun fortlaufend, so daß der bistabile Laser im angeregten inaktiven Zustand bleibt. Erst durch Einstrahlen von Licht der Wellenlängen 1530 nm bis 1570 nm, welches dem Übergang von Energieniveau E₁ zum Energieniveau E₀ entspricht, tritt der Prozeß der stimulierten Emission hinzu (Übergang 5). Die Prozesse der stimulierten Emission (Übergang 5) und der Anregung aus angeregtem Zustand (Übergang 3) stehen miteinander in Konkurrenz. Je mehr Signallicht in die Erbium dotierte Faser eingestrahlt wird, um so weniger tritt die Anregung aus angeregtem Zustand (Übergang 3) auf. Der bistabile Laser geht dann in den laseraktiven Zustand über.

Beim Ausführungsbeispiel wird die Erbium dotierte Faser mit Pumplicht einer Wellenlänge (800 nm) gepumpt. Die Erfindung kann auch bei einem Pumplicht mit zwei Wellenlängen, z.B. 800 nm und 980 nm, angewendet werden. Die Pumplichtquelle PUMP beinhaltet dann z.B. zwei Laser und einen wellenlängenabhängigen Koppler. Der eine Laser dient der Erzeugung von 800 nm-Pumplicht, der andere Laser der Erzeugung von 980 nm-Pumplicht. Über den wellenlängenabhängigen Koppler werden das 800 nm-Pumplicht und das 980 nm-Pumplicht in eine Faser gekoppelt, so daß über eine Faser Pumplicht mit zwei Wellenlängen in den Resonator RES des bistabilen Lasers LAS eingekoppelt werden kann. Das Pumplicht der Wellenlänge 980 nm kann zum Anregen von Elektronen vom Energieniveau E₀ ins Energieniveau E₂ (und damit ins Energieniveau E₁) und das Pumplicht der Wellenlänge 800 nm zur Erzeugung der Anregung aus angeregtem Zustand (Übergang 3) verwendet werden. Die Anregung von Elektronen vom Energieniveau E₀ ins Energieniveau E₁ ist mit 980 nm-Pumplicht effektiver als mit 800 nm-Pumplicht. Infolgedessen ist bei der Verwendung von Pumplicht mit zwei Wellenlängen eine höhere Ausgangsleistung für den bistabilen Laser LAS möglich. Die Angaben für die Absolutwerte der Wellenlängen sind beispielhaft. So kann z.B. für die Erzeugung der Anregung aus angeregtem Zustand (Übergang 3) Licht der Wellenlängen im Bereich von 780 nm bis 850 nm verwendet werden.

Im Ausführungsbeispiel ist ein bistabiler Laser LAS mit einer Erbium dotierten Faser als laseraktives Medium beschrieben. Anstelle der Erbium dotierten Faser kann auch eine mit einem anderen Element aus der Gruppe der seltenen Erden dotierte Faser als laseraktives Medium verwendet werden.

Ferner sind im Ausführungsbeispiel nur die für das Verständnis erforderlichen Teile und Baugruppen des bistabilen Lasers LAS erwähnt. Auf weitere Teile und Baugruppen, wie z.B. zusätzliche optische Isolatoren, Polarisatoren, optische Filter, optische Dämpfer oder Synchronisationseinrichtungen, deren Verwendung, Anordnung, Vorteile oder gar Notwendigkeit dem Fachmann z.B. aus der Druckschrift Electronic Letters 24th October 1991, Vol. 27, No. 22 bekannt sind, wurde in der Beschreibung nicht näher eingegangen.

## Patentansprüche

1. Optisch gepumpter bistabiler Laser (LAS) mit einem laseraktiven Medium (ER), mit einem Resonator (RES), mit einer Pumplichtquelle ( PUMP), durch deren Pumplicht das laseraktive Medium (ER) in einen angeregten inaktiven Zustand gebracht werden kann, in dem Elektronen fortlaufend von einem ersten (E₁), energetisch über dem Grundzustand (E₀) liegenden Energieniveau in ein zweites (E₄), energetisch über dem ersten liegenden Energieniveau angeregt werden, und mit einer Einkoppelvorrichtung (FC) zum Einkoppeln von Signallicht welches den Übergang vom ersten Energieniveau (E₁) zum Grundzustand (E₀) entspricht, durch das sich das im angeregten inaktiven Zustand befindliche laseraktive Medium (ER) in einen laseraktiven Zustand gebracht werden kann.

2. Optisch gepumpter bistabiler Laser (LAS) nach Anspruch 1, dadurch gekennzeichnet, daß das laseraktive Medium (ER) eine mit einem Element der Gruppe der seltenen Erden dotierte Faser und der Resonator (RES) ein Faserresonator ist.

3. Optisch gepumpter bistabiler Laser (LAS) nach Anspruch 1, dadurch gekennzeichnet, daß der Resonator (RES) ein Ringresonator ist.

4. Optisch gepumpter bistabiler Laser (LAS) nach Anspruch 1, dadurch gekennzeichnet, daß der bistabile Laser ein oder mehrere optische Isolatoren (ISO) beinhaltet.

5. Optisch gepumpter bistabiler Laser (LAS) nach Anspruch 1, dadurch gekennzeichnet, daß die Pumplichtquelle (PUMP) eine Lichtquelle für Licht der Wellenlänge im Bereich von 780 nm bis 850 nm ist.

6. Optisch gepumpter bistabiler Laser (LAS) nach Anspruch 1, dadurch gekennzeichnet, daß die Pumplichtquelle (PUMP) zwei Laser mit unterschiedlichen Emissionswellenlängen beinhaltet, und die Emissionswellenlängen kürzer sind als die Wellenlängen des Signallichts.

7. Optisch gepumpter bistabiler Laser (LAS) nach Anspruch 1, dadurch gekennzeichnet, die Resonatorlänge derart ausgebildet ist, daß bei einem gepulsten Signallicht die Frequenz des Grundtakts einem ganzzahligen Vielfachen des Kehrwertes der Laufzeit des Lichts durch den Resonator (RES) entspricht.

8. Optisch gepumpter bistabiler Laser (LAS) nach Anspruch 1, dadurch gekennzeichnet, daß die Resonatorlänge derart ausgebildet ist, daß bei einem optischen Puls als Signallicht die Pulsdauer des optischen Pulses mindestens der Laufzeit des Lichts durch den Resonator (RES) entspricht.

9. Verwendung eines optisch gepumpten bistablien Lasers (LAS) nach Anspruch 7 als Pulsgenerator.

10. Verwendung eines optisch gepumpten bistablien Lasers (LAS) nach Anspruch 7 zur Taktrückgewinnung.

11. Verwendung eines optisch gepumpten bistablien Lasers (LAS) nach Anspruch 8 als Kippstufe.

## Claims

1. An optically pumped bistable laser (LAS) comprising a laser-active medium (ER), a resonator (RES), a pump light source (PUMP) whose pump light can bring the laser-active medium (ER) into an excited inactive state in which electrons are continuously excited from a first energy level (E₁), which in terms of energy is above the basic state (E₀), to a second energy level (E₄), which in terms of energy is above the first energy level, and an input-coupling device (FC) for the input-coupling of signal light which corresponds to the transition from the first energy level (E₁) to the basic state (E₀) and by which the laser-active medium (ER) in the excited inactive state can be brought into a laser-active state.

2. An optically pumped bistable laser (LAS) according to Claim 1, characterised in that the laser-active medium (ER) is a fibre doped with an element of the rare earths group and the resonator (RES) is a fibre resonator.

3. An optically pumped bistable laser (LAS) according to Claim 1, characterised in that the resonator (RES) is a ring resonator.

4. An optically pumped bistable laser (LAS) according to Claim 1, characterised in that the bistable laser comprises one or more optical isolators (ISO).

5. An optically pumped bistable laser (LAS) according to Claim 1, characterised in that the pump light source (PUMP) is a light source for light in the wavelength range of 780 nm to 850 nm.

6. An optically pumped bistable laser (LAS) according to Claim 1, characterised in that the pump light source (PUMP) comprises two lasers with different emission wavelengths and the emission wavelengths are shorter than the wavelengths of the signal light.

7. An optically pumped bistable laser (LAS) according to Claim 1, characterised in that the resonator length is designed such that, in the case of pulsed signal light, the frequency of the basic clock corresponds to an integer multiple of the reciprocal value of the transit time of the light through the resonator (RES).

8. An optically pumped bistable laser (LAS) according to Claim 1, characterised in that the resonator length is designed such that, in the case of signal light in the form of one optical pulse, the pulse duration of the optical pulse corresponds at least to the transit time of the light through the resonator (RES).

9. The use of an optically pumped bistable laser (LAS) according to Claim 7 as pulse generator.

10. The use of an optically pumped bistable laser (LAS) according to Claim 7 for clock recovery.

11. The use of an optically pumped bistable laser (LAS) according to Claim 8 as a trigger circuit.

## Revendications

1. Laser bistable à pompage optique (LAS) avec un milieu actif dans le laser (ER), un résonateur (RES), une source lumineuse de pompage (PUMP), par la lumière de pompage de laquelle le milieu actif dans le laser (ER) peut être amené dans un état inactif excité, dans lequel des électrons sont excités en continu à partir d'un premier niveau d'énergie (E₁), situé du point de vue énergétique au-dessus de l'état de base (E₀), vers un deuxième niveau d'énergie (E₄), situé du point de vue énergétique au-dessus du premier niveau d'énergie, et avec un dispositif d'injection (FC) pour injecter une lumière de signal, qui correspond à la transition du premier niveau d'énergie (E₁) à l'état de base (E₀), par laquelle le milieu actif dans le laser (ER), qui se trouve à l'état inactif excité, peut être amené à un état actif dans le laser.

2. Laser bistable à pompage optique (LAS) selon la revendication 1, caractérisé en ce que le milieu actif dans le laser (ER) est une fibre dopée par un élément du groupe des terres rares et le résonateur (RES) est un résonateur à fibre optique.

3. Laser bistable à pompage optique (LAS) selon la revendication 1, caractérisé en ce que le résonateur (RES) est un résonateur annulaire.

4. Laser bistable à pompage optique (LAS) selon la revendication 1, caractérisé en ce que le laser bistable contient un ou plusieurs isolateurs optiques (ISO).

5. Laser bistable à pompage optique (LAS) selon la revendication 1, caractérisé en ce que la source lumineuse de pompage (PUMP) est une source lumineuse pour une lumière de la longueur d'onde située dans la plage de 780 nm à 850 nm.

6. Laser bistable à pompage optique (LAS) selon la revendication 1, caractérisé en ce que la source lumineuse de pompage (PUMP) contient deux lasers de longueurs d'onde d'émission différentes, et les longueurs d'onde d'émission sont plus courtes que les longueurs d'onde de la lumière de signal.

7. Laser bistable à pompage optique (LAS) selon la revendication 1, caractérisé en ce que la longueur du résonateur est réalisée de telle sorte qu'avec une lumière de signal pulsée, la fréquence de la synchronisation de base correspond à un multiple entier de la valeur réciproque du temps de propagation de la lumière à travers le résonateur (RES).

8. Laser bistable à pompage optique (LAS) selon la revendication 1, caractérisé en ce que la longueur du résonateur est réalisée de telle sorte qu'avec une impulsion optique comme lumière de signal, la durée d'impulsion de l'impulsion optique correspond au moins au temps de propagation de la lumière à travers le résonateur (RES).

9. Utilisation d'un laser bistable à pompage optique (LAS) selon la revendication 7 comme générateur d'impulsions.

10. Utilisation d'un laser bistable à pompage optique (LAS) selon la revendication 7 pour récupérer une synchronisation.

11. Utilisation d'un laser bistable à pompage optique (LAS) selon la revendication 8 comme bascule.
